(19) Europäisches Patentamt
European Patent Office
Office européen des brevets

(11) **EP 4 186 716 B1**

(12) **EUROPEAN PATENT SPECIFICATION**

(45) Date of publication and mention of the grant of the patent:
**13.11.2024 Bulletin 2024/46**

(21) Application number: **22210389.7**

(22) Date of filing: **29.11.2022**

(51) International Patent Classification (IPC):
**B60C 23/00** (2006.01)   **B60G 17/019** (2006.01)
**B60G 17/0195** (2006.01)

(52) Cooperative Patent Classification (CPC):
**B60C 23/002; B60G 17/0195;** B60C 2200/08;
B60G 2202/15; B60G 2202/152; B60G 2202/24;
B60G 2202/242; B60G 2300/082; B60G 2400/208;
B60G 2400/302; B60G 2400/51; B60G 2400/52;
B60G 2400/61; B60G 2600/70; B60G 2800/0192

(54) **ADAPTIVE TIRE CONTROL**

ADAPTIVE REIFENSTEUERUNG

COMMANDE ADAPTATIVE DE PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.11.2021 US 202117539139**

(43) Date of publication of application:
**31.05.2023 Bulletin 2023/22**

(73) Proprietor: **CNH Industrial Italia S.p.A.**
**10156 Torino (IT)**

(72) Inventors:
• **WANG, Guoping**
  **Naperville, 60565 (US)**
• **GUO, Haibo**
  **Naperville, 60564 (US)**
• **ADUPALA, Rajeshwar**
  **Naperville, 60540 (US)**

(74) Representative: **CNH Industrial IP Department**
**Leon Claeysstraat 3A**
**8210 Zedelgem (BE)**

(56) References cited:
**US-A- 4 887 454**

• **REGAZZI NICOLÒ ET AL: "A theoretical study of the parameters affecting the power delivery efficiency of an agricultural tractor", BIOSYSTEMS ENGINEERING, ELSEVIER, AMSTERDAM, NL, vol. 186, 20 August 2019 (2019-08-20), pages 214 - 227, XP085836260, ISSN: 1537-5110, [retrieved on 20190820], DOI: 10.1016/J.BIOSYSTEMSENG.2019.07.006**

## Description

### BACKGROUND

The present invention relates generally to work vehicles. More specifically, the present invention relates to control of axle lead ratio in vehicles

### PRIOR ART

Document US 4887454 A describes a system for managing suspension pressure and tyre pressure dependent on dynamic vehicle load.

### SUMMARY

It is an object of the invention to provide an improved system better adapted for agricultural vehicles.

This object is achieved by a system as defined in claim 1. Preferred aspects are covered by the dependent claims.

One embodiment relates to a system that includes a hydraulic suspension system including a front suspension actuator, and a front suspension pressure sensor associated with the front suspension actuator; a tire inflation system; and one or more processing circuits comprising one or more memory devices coupled to one or more processors, the one or more memory devices configured to store instructions thereon that, when executed by the one or more processors, cause the one or more processors to: determine a dynamic weight based on information received from the front suspension pressure sensor of the hydraulic suspension system, determine a current front axle lead ratio based on the dynamic weight, determine a target front axle lead ratio, and control operation of the tire inflation system to adjust from the current front axle lead ratio to the target front axle lead ratio.

Another embodiment relates to a system that includes one or more processing circuits comprising one or more memory devices coupled to one or more processors, the one or more memory devices configured to store instructions thereon that, when executed by the one or more processors, cause the one or more processors to: determine a dynamic weight based on information received from a suspension pressure sensor associated with a suspension actuator of a hydraulic suspension system, determine a rolling radius of a tire supported by the suspension actuator based on the dynamic weight, determine a current axle lead ratio based on the rolling radius, determine a target axle lead ratio, determine a target tire pressure change of the tire to adjust the current axle lead ratio to the target axle lead ratio, and control operation of a tire inflation system to implement the target tire pressure change.

An example not covered by the claims, but useful for understanding the invention, relates to a method that includes determining a dynamic weight based on information received from a suspension pressure sensor associated with a suspension actuator of a hydraulic suspension system, querying a lookup table using the dynamic weight and a current tire pressure received from a tire pressure sensor associated with a tire, returning a current rolling radius of the tire from the lookup table, determining a current axle lead ratio based on the returned current rolling radius, determining a target axle lead ratio, querying the lookup table using the dynamic weight and a target rolling radius associated with the target axle lead ratio, returning a target tire pressure of the tire from the lookup table, determining a target tire pressure change based on a target tire pressure and the current tire pressure to adjust the current axle lead ratio to the target axle lead ratio, and controlling operation of a tire inflation system to implement the target tire pressure change.

This summary is illustrative only and is not intended to be in any way limiting the scope of the invention as defined by the appended claims. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a perspective view of a vehicle, according to an exemplary embodiment.
FIG. 2 is a schematic block diagram of the vehicle of FIG. 1, according to an exemplary embodiment.
FIG. 3 is a schematic block diagram of a driveline of the vehicle of FIG. 1, according to an exemplary embodiment.
FIG. 4 is a schematic diagram of a controller of the vehicle of FIG. 1, according to an exemplary embodiment.
FIG. 5 is a schematic diagram of a lookup table used by the controller of FIG. 4, according to an exemplary embodiment.
FIG. 6 is a flow diagram of a method of adjusting a front axle lead ratio of the vehicle of FIG. 1, according to an exemplary embodiment.

### DETAILED DESCRIPTION

Before turning to the figures, which illustrate certain exemplary embodiments in detail, it should be understood that the present invention as defined by the appended claims is not limited to the details or methodology set forth in the description or illustrated in the figures. It should also be understood that the terminology used herein is for the purpose of description only and should not be regarded as limiting.

According to an exemplary embodiment, a vehicle (e.g., a tractor) of the present disclosure includes front wheel and rear wheels, a hydraulic suspension system, and a central tire inflation system. A controller is structured to determine a current front axle lead ratio based on dynamic loading of the vehicle (e.g., during operation), and adjust tire pressures of front tires mounted on the front wheels and rear tires mounted on the rear wheels to achieve a target front axle lead ratio. Dynamic loading of the vehicle (e.g., while towing an implement) may result in a dynamic weight shift and an increased dynamic weight on the rear tires. The increased dynamic weight results in a reduced rolling radius of the rear tires and an increased front axle lead ratio. A front axle lead ratio larger than the target front axle lead ratio can result in increased front wheel slippage, increased rear wheel drag, and an overall decrease in tractive efficiency of the vehicle. Adjustment of the tire pressures can affect the tire rolling radius and therefore be used to control the front axle lead ratio and improve the tractive efficiency of the vehicle.

**Overall Vehicle**

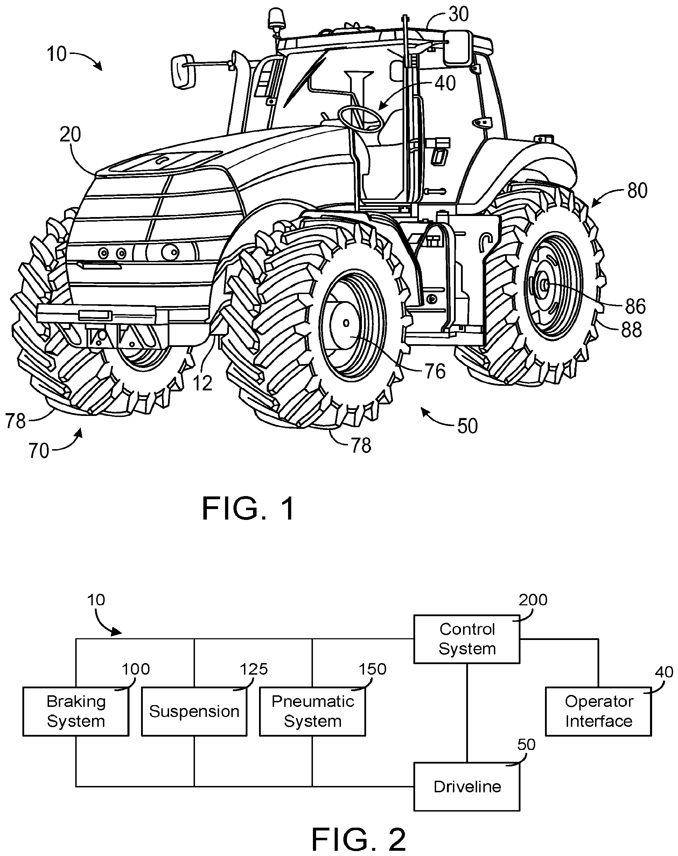

According to the exemplary embodiment shown in FIGS. 1-3, a machine or vehicle, shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 100, coupled to one or more components of the driveline 50 to facilitate selectively braking the one or more components of the driveline 50; a vehicle suspension 125 coupled between the frame 12 and one or more components of the driveline 50 (e.g., tractive elements 78 and 88 discussed below) to facilitate the dampening of vibrations during travel of the vehicle 10, level the vehicle 10, raise/lower the vehicle 10, or adjust the orientation or alignment of the vehicle 10 to the ground; a pneumatic system 150 coupled to the frame 12 and structured to provide pressurized air to the vehicle 10; and a vehicle control system, shown as control system 200, coupled to the operator interface 40, the driveline 50, the braking system 100, the suspension 125, and the pneumatic system 150. In other embodiments, the vehicle 10 includes more or fewer components.

According to an exemplary embodiment, the vehicle 10 is an off-road machine or vehicle. In some embodiments, the off-road machine or vehicle is an agricultural machine or vehicle such as a tractor, a telehandler, a front loader, a combine harvester, a grape harvester, a forage harvester, a sprayer vehicle, a speedrower, and/or another type of agricultural machine or vehicle. In some embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In some embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 may include one or more displays and one or more input devices. The one or more displays may be or include a touchscreen, a LCD display, a LED display, a speedometer, gauges, warning lights, etc. The one or more input device may be or include a steering wheel, a joystick, buttons, switches, knobs, levers, an accelerator pedal, a brake pedal, etc.

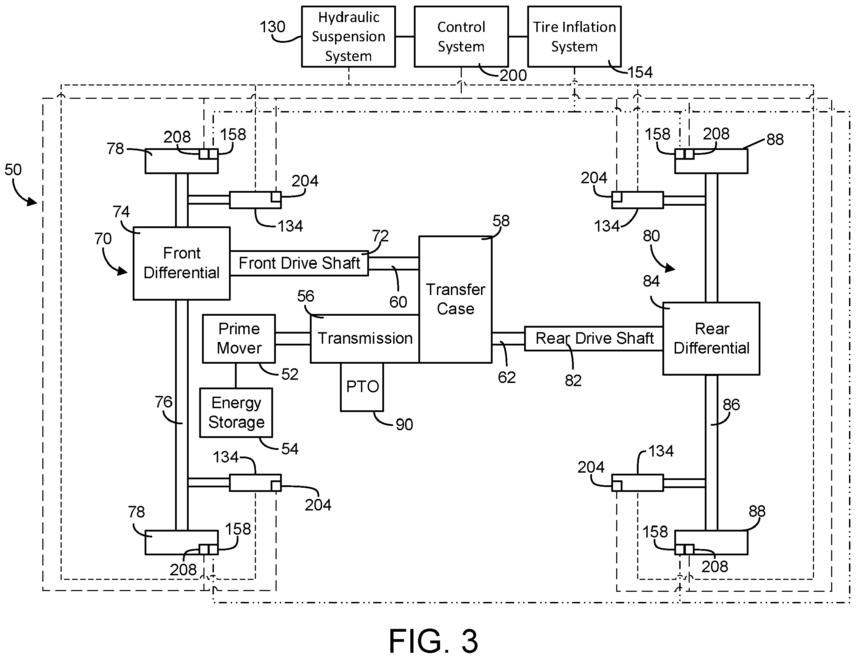

According to an exemplary embodiment, the driveline 50 is configured to propel the vehicle 10. As shown in FIG. 3, the driveline 50 includes a primary driver, shown as prime mover 52, and an energy storage device, shown as energy storage 54. In some embodiments, the driveline 50 is a conventional driveline whereby the prime mover 52 is an internal combustion engine and the energy storage 54 is a fuel tank. The internal combustion engine may be a spark-ignition internal combustion engine or a compression-ignition internal combustion engine that may use any suitable fuel type (e.g., diesel, ethanol, gasoline, natural gas, propane, etc.). In some embodiments, the driveline 50 is an electric driveline whereby the prime mover 52 is an electric motor and the energy storage 54 is a battery system. In some embodiments, the driveline 50 is a fuel cell electric driveline whereby the prime mover 52 is an electric motor and the energy storage 54 is a fuel cell (e.g., that stores hydrogen, that produces electricity from the hydrogen, etc.). In some embodiments, the driveline 50 is a hybrid driveline whereby (i) the prime mover 52 includes an internal combustion engine and an electric motor/generator and (ii) the energy storage 54 includes a fuel tank and/or a battery system.

As shown in FIG. 3, the driveline 50 includes a transmission device (e.g., a gearbox, a continuous variable transmission ("CVT"), etc.), shown as transmission 56, coupled to the prime mover 52; a power divider, shown as transfer case 58, coupled to the transmission 56; a first tractive assembly, shown as front tractive assembly 70, coupled to a first output of the transfer case 58, shown as front output 60; and a second tractive assembly, shown as rear tractive assembly 80, coupled to a second output of the transfer case 58, shown as rear output 62. According to an exemplary embodiment, the transmission 56 has a variety of configurations (e.g., gear ratios, etc.) and provides different output speeds relative to a mechanical input received thereby from the prime mover 52. In some embodiments (e.g., in electric driveline configurations, in hybrid driveline configurations, etc.), the driveline 50 does not include the transmission 56. In such embodiments, the prime mover 52 may be directly coupled to the transfer case 58. According to an exemplary embodiment, the transfer case 58 is configured to facilitate driving both the front tractive assembly 70 and the rear tractive assembly 80 with the prime mover 52 to facilitate front and rear drive (e.g., an all-wheel-drive vehicle, a four-wheel-drive vehicle, etc.). In some embodiments, the transfer case 58 facilitates selectively engaging rear drive only, front drive only, and both front and rear drive simultaneously. In some embodiments, the transmission 56 and/or the transfer case 58 facilitate selectively disengaging the front tractive assembly 70 and the rear tractive assembly 80 from the prime mover 52 (e.g., to permit free movement of the front tractive assembly 70 and the rear tractive assembly 80 in a neutral mode of operation). In some embodiments, the driveline 50 does not include the transfer case 58. In such embodiments, the prime mover 52 or the transmission 56 may directly drive the front tractive assembly 70 (i.e., a front-wheel-drive vehicle) or the rear tractive assembly 80 (i.e., a rear-wheel-drive vehicle).

As shown in FIGS. 1 and 3, the front tractive assembly 70 includes a first drive shaft, shown as front drive shaft 72, coupled to the front output 60 of the transfer case 58; a first differential, shown as front differential 74, coupled to the front drive shaft 72; a first axle, shown front axle 76, coupled to the front differential 74; and a first pair of tractive elements, shown as front tractive elements 78, coupled to the front axle 76. In some embodiments, the front tractive assembly 70 includes a plurality of front axles 76. In some embodiments, the front tractive assembly 70 does not include the front drive shaft 72 or the front differential 74 (e.g., a rear-wheel-drive vehicle). In some embodiments, the front drive shaft 72 is directly coupled to the transmission 56 (e.g., in a front-wheel-drive vehicle, in embodiments where the driveline 50 does not include the transfer case 58, etc.) or the prime mover 52 (e.g., in a front-wheel-drive vehicle, in embodiments where the driveline 50 does not include the transfer case 58 or the transmission 56, etc.). The front axle 76 may include one or more components.

As shown in FIGS. 1 and 3, the rear tractive assembly 80 includes a second drive shaft, shown as rear drive shaft 82, coupled to the rear output 62 of the transfer case 58; a second differential, shown as rear differential 84, coupled to the rear drive shaft 82; a second axle, shown rear axle 86, coupled to the rear differential 84; and a second pair of tractive elements, shown as rear tractive elements 88, coupled to the rear axle 86. In some embodiments, the rear tractive assembly 80 includes a plurality of rear axles 86. In some embodiments, the rear tractive assembly 80 does not include the rear drive shaft 82 or the rear differential 84 (e.g., a front-wheel-drive vehicle). In some embodiments, the rear drive shaft 82 is directly coupled to the transmission 56 (e.g., in a rear-wheel-drive vehicle, in embodiments where the driveline 50 does not include the transfer case 58, etc.) or the prime mover 52 (e.g., in a rear-wheel-drive vehicle, in embodiments where the driveline 50 does not include the transfer case 58 or the transmission 56, etc.). The rear axle 86 may include one or more components. According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.). In some embodiments, the front tractive elements 78 and the rear tractive elements 88 are both steerable. In other embodiments, only one of the front tractive elements 78 or the rear tractive elements 88 is steerable. In still other embodiments, both the front tractive elements 78 and the rear tractive elements 88 are fixed and not steerable.

In some embodiments, the driveline 50 includes a plurality of prime movers 52. By way of example, the driveline 50 may include a first prime mover 52 that drives the front tractive assembly 70 and a second prime mover 52 that drives the rear tractive assembly 80. By way of another example, the driveline 50 may include a first prime mover 52 that drives a first one of the front tractive elements 78, a second prime mover 52 that drives a second one of the front tractive elements 78, a third prime mover 52 that drives a first one of the rear tractive elements 88, and/or a fourth prime mover 52 that drives a second one of the rear tractive elements 88. By way of still another example, the driveline 50 may include a first prime mover that drives the front tractive assembly 70, a second prime mover 52 that drives a first one of the rear tractive elements 88, and a third prime mover 52 that drives a second one of the rear tractive elements 88. By way of yet another example, the driveline 50 may include a first prime mover that drives the rear tractive assembly 80, a second prime mover 52 that drives a first one of the front tractive elements 78, and a third prime mover 52 that drives a second one of the front tractive elements 78. In such embodiments, the driveline 50 may not include the transmission 56 or the transfer case 58.

As shown in FIG. 3, the driveline 50 includes a power-take-off ("PTO"), shown as PTO 90. While the PTO 90 is shown as being an output of the transmission 56, in other embodiments the PTO 90 may be an output of the prime mover 52, the transmission 56, and/or the transfer case 58. According to an exemplary embodiment, the PTO 90 is configured to facilitate driving an attached implement and/or a trailed implement of the vehicle 10. In some embodiments, the driveline 50 includes a PTO clutch positioned to selectively decouple the driveline 50 from the attached implement and/or the trailed implement of the vehicle 10 (e.g., so that the attached implement and/or the trailed implement is only operated when desired, etc.).

According to an exemplary embodiment, the braking system 100 includes one or more brakes (e.g., disc brakes, drum brakes, in-board brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 100 may include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

As shown in FIG. 3, the suspension system 125 discussed above includes a hydraulic suspension system 130. In some embodiments, the hydraulic suspension system 130 includes a hydraulic pump (e.g., driven by the PTO 90 or another portion of the driveline 50), a hydraulic fluid reservoir, accumulators, valves, switches, and other components. The hydraulic suspension system 130 can provide passive suspension or active suspension control (e.g., leveling, canting, roll control, or other active control of the orientation of the vehicle 10 relative to the ground). The hydraulic suspension system 130 includes hydraulic suspension units in the form of suspension actuators 134 coupled between the frame 12 of the vehicle 10 and the tractive elements 78, 88 (e.g., the wheels) to provide spring/damping, and to raise and lower the frame 12 relative to the tractive elements 78, 88. In some embodiments, the vehicle 10 includes four suspension actuators 134, one associated with each of the four tractive elements 78, 88. In some embodiments, more than four or less than four suspension actuators are included. Each suspension actuator 134 includes a rod end including a piston that is received in a cylinder.

The hydraulic suspension system 130 is arranged in hydraulic communication with the suspension actuators 134 to adjust ride height, leveling, spring, rate, or other parameters of operation, as desired. In some embodiments, the suspension actuators 134 is a gas/hydraulic spring damper unit that may also be coupled to the pneumatic system 150 to adjust a spring or damper rate.

The pneumatic system 150 includes a central tire inflation system 154 that is coupled to tire pressure units 158 associated with each tractive element 78, 88 to increase or decrease tire pressure. In some embodiments, the tire inflation system 154 includes an air compressor, an accumulator, and/or other components. In some embodiments, the tire pressure units 158 include a pneumatic valve and/or an assembly providing pressurized air to the interior of the tractive elements 78, 88 while the vehicle 10 is in use.

The control system 200 is arranged in communication with the hydraulic suspension system 130 and the tire inflation system 154 and receives signals from a sensor array 210 including suspension sensors 204 and tire pressure sensors 208. The suspension sensors 204 are positioned to monitor a rod side pressure and a head side pressure of the suspension actuators 134 and send a signal to the control system 200 indicative of hydraulic pressures at rod-side and head-side of the suspension actuator 134. The tire pressure sensors 208 are positioned to monitor the tire pressure and send a signal to the control system 200 indicative of the tire pressure.

**Adaptive Tire Pressure Control System**

An adaptive tire pressure control system is provided for the vehicle 10 and includes the hydraulic suspension system 130, the tire inflation system 154, and the control system 200. In some embodiments, the vehicle 10 is a mechanical front-wheel drive tractor. In some embodiments, the vehicle 10 is a four-wheel drive tractor or a vehicle 10 switchable between front wheel drive, rear wheel drive, and/or four wheel drive.

A front axle lead ratio Z is determined using the following equation:

$$Z = \frac{V_{tf}}{V_{tr}} = \frac{2\pi R_f Z_f}{2\pi R_r Z_r}$$

Where Vtf is a front wheel theoretical ground speed, Vtr is a rear wheel theoretical ground speed, Zf is a front wheel transmission ratio, Zr is a rear wheel transmission ratio, Rf is a front wheel rolling radius, and Rr is a rear wheel rolling radius. The front wheel transmission ratio Zf and the rear wheel transmission ratio Zr are fixed, and variations in tire inflation pressure and wheel vertical load impact the front wheel rolling radius Rf and the rear wheel rolling radius Rr. The inflation pressure of the front wheels 78 and the rear wheels 88 can be changed via the tire inflation system 154 to manipulate the front axle lead ratio Z.

When the vehicle 10 travels without a tractive load, that is, without an implement (e.g., a trailer, a grain cart, a cultivator, etc.), an ideal situation from tractive efficiency (i.e., a ratio of drawbar power to axle power) perspective is that the front wheels 78 and the rear wheels 88 have zero slip, and therefore the slip related power loss is zero (i.e., a tractive efficiency of 1).

When the front axle lead ratio Z is greater than zero percent (0%) the vehicle experiences front wheel slip and rear wheel skid and a front wheel slip force, or driving force, is opposed by a rear wheel skid force, or resistance force, so that the total longitudinal force on the vehicle 10 is zero. Tractive power loss occurs due to the kinematic discrepancy between the front wheels 78 and the rear wheels 88. As the front axle lead ratio Z increases, a power loss, tire wear, and fuel consumption will increase as well.

It is desirable that the front wheels 78 will experience zero skid (i.e., minimized skidding) in order to maintain steering controllability. Alternatively, excessive front axle lead ratios Z will increase the front wheel slip and results in increased rear wheel digging.

When the vehicle 10 travels with a tractive load such as a drawbar implement, a hitched implement, a trailer, or a grain cart, and the front axle lead ratio Z is greater than zero, the front wheels 78 have a higher slip and the rear wheels 88 have a lower slip. Because the tractive efficiency of the wheels 78, 88 is a function of slip, the front wheels 78 of a higher slip and the rear wheels 88 of a lower slip may not result in an optimal wheel tractive efficiency together, and consequently the overall vehicle tractive efficiency will not reach an optimal value.

Dynamic tractive loads cause dynamic tractor weight transfer from the front axle 76 to rear axle 86. The greater the tractive load, the greater the weight transfer from the front axle 76 to the rear axle 86. Typically, front tires mounted on the front wheels 78 and rear tires mounted on the rear wheels 88 are inflated based on static load on the wheel 78, 88. The reduced front wheel load caused by tractive loads results in an increased front wheel rolling radius Rf, and a decreased rear wheel rolling radius Rr. The dynamic weight transfer, as a result of dynamic tractive load, can further increase the kinematic discrepancy and the front axle lead ratio Z (lead-lag ratio), between front wheels 78 and rear wheels 88, and consequently impact the tractive efficiency of the vehicle 10.

This disclosure includes systems and methods for controlling tire inflation in order to adapt to tractive load variations for optimal tractive efficiency. The systems and methods inflate the tires to a baseline front tire pressure and a baseline rear tire pressure under static front axle weight and rear axle weight. During work with an implement, the systems and methods calculate tractor dynamic weight, and then adaptively adjust inflation pressures of front tires and/or rear tires to manage the front axle lead ratio Z and achieve an improved tractive efficiency.

ciency.

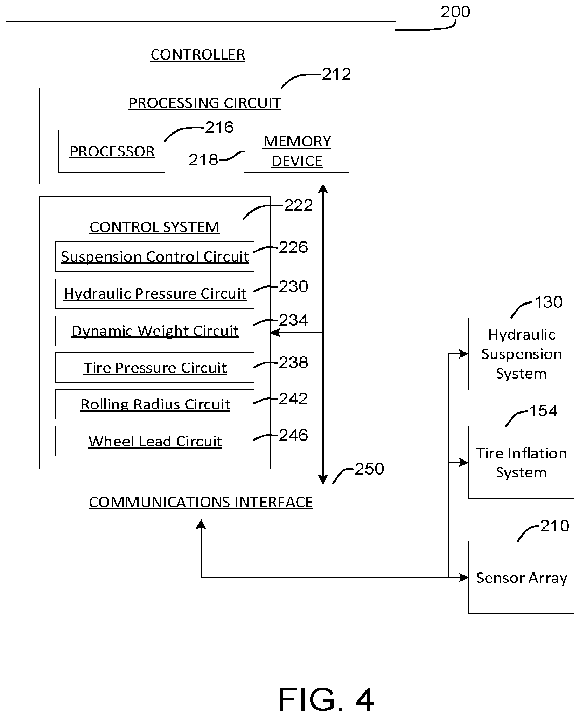

Referring now to FIG. 4, a schematic diagram of the control system 200 in the form of a controller 200 of the vehicle 10 of FIG. 1 is shown according to an example embodiment. As shown in FIG. 4, the controller 200 includes a processing circuit 212 having a processor 216 and a memory device 218; a control system 222 having a suspension control circuit 226, a hydraulic pressure circuit 230, a rolling radius circuit 242, a dynamic weight circuit 234, a wheel lead circuit 246, and a tire pressure circuit 238; and a communications interface 250. Generally, the controller 200 is structured to determine dynamic weight distribution, determine a front axle lead ratio Z, and adjust tire inflation to provide a desired front axle lead ratio Z. The vehicle 10 is equipped with suspended front axle 76 and central tire inflation system 154 that can be used to determine the dynamic weight distribution or weight transfer, and to make adjustment of the tire pressures on the front tires 78 and the rear tires 88 to affect and control the front axle lead ratio Z. In some embodiments, no additional sensors are required and the dynamic weights are determined based solely on the information received from the hydraulic suspension system 130. Other vehicles (e.g., tractors) may require additional sensors, such as strain gauges in order to determine dynamic weights increasing cost and complexity of the system. In some embodiments, the controller 200 may receive information from strain gauges and other sensors. In some embodiments, the dynamic weights are determined with a combination of strain gauge information and hydraulic suspension system 130 information.

In one configuration, the control system 222 is embodied as machine or computer-readable media that is executable by a processor, such as processor 216. As described herein and amongst other uses, the machine-readable media facilitates performance of certain operations to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data). The computer readable media may include code, which may be written in any programming language including, but not limited to, Java or the like and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the control system 222 is embodied as hardware units, such as electronic control units. As such, the control system 222 may be embodied as one or more circuitry components including, but not limited to, processing circuitry, network interfaces, peripheral devices, input devices, output devices, sensors, etc. In some embodiments, the control system 222 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the control system 222 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on). The control system 222 may also include programmable hardware devices such as field programmable gate arrays, programmable array logic, programmable logic devices or the like. The control system 222 may include one or more memory devices for storing instructions that are executable by the processor(s) of the control system 222. The one or more memory devices and processor(s) may have the same definition as provided below with respect to the memory device 218 and processor 216. In some hardware unit configurations, the control system 222 may be geographically dispersed throughout separate locations in the vehicle 10. Alternatively and as shown, the control system 222 may be embodied in or within a single unit/housing, which is shown as the controller 200.

In the example shown, the controller 200 includes the processing circuit 212 having the processor 216 and the memory device 218. The processing circuit 212 may be structured or configured to execute or implement the instructions, commands, and/or control processes described herein with respect to control system 222. The depicted configuration represents the control system 222 as machine or computer-readable media. However, as mentioned above, this illustration is not meant to be limiting as the present disclosure contemplates other embodiments where the control system 222, or at least one circuit of the control system 222, is configured as a hardware unit. All such combinations and variations are intended to fall within the scope of the present disclosure.

The hardware and data processing components used to implement the various processes, operations, illustrative logics, logical blocks, modules and circuits described in connection with the embodiments disclosed herein (e.g., the processor 216) may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, or state machine. A processor also may be implemented as a combination of computing devices, such as a combination of a DSP and a microprocessor, a plurality of microprocessors, one or more microprocessors in conjunction with a DSP core, or any other such configuration. In some embodiments, the one or more processors may be shared by multiple circuits (e.g., the control system 222 may comprise or otherwise share the same processor which, in some example embodiments, may execute instructions stored, or otherwise accessed, via different areas of memory). Alternatively or additionally, the one or more processors may be structured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure.

The memory device 218 (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory device 218 may be communicably connected to the processor 216 to provide computer code or instructions to the processor 216 for executing at least some of the processes described herein. Moreover, the memory device 218 may be or include tangible, non-transient volatile memory or non-volatile memory. Accordingly, the memory device 218 may include database components, object code components, script components, or any other type of information structure for supporting the various activities and information structures described herein.

The suspension control circuit 226 is structured to actively control the hydraulic suspension system 130 via the communications interface 250 to raise, lower, level, or otherwise adjust the orientation of the vehicle 10. In some embodiments, the suspension control circuit 226 controls operation of pumps, valves, and other control components of the hydraulic suspension system 130 including the suspension actuator 134.

The hydraulic pressure circuit 230 is structured to receive signals from the suspension sensors 204 associated with the suspension actuators 134, and determine hydraulic pressures. The hydraulic pressure circuit 230 also determines a front axle weight and a rear axle weight based on the hydraulic pressures at rod side and head side of each suspension actuator 134. In some embodiments, the hydraulic pressure circuit 230 records the head side hydraulic cylinder pressures and the rod side pressures of the front suspension actuators 134 via the suspension sensors 204 while vehicle 10 is not moving and determines a cylinder force. The hydraulic pressure circuit 230 then determines a static front axle weight FWS(i) and a static rear axle weight RWS(i) that is supported by the suspension actuators 134 based on the cylinder force while the vehicle 10 is stationary.

The dynamic weight circuit 234 is structured to determine dynamic weights during travel or field operation. A dynamic front axle weight FWD is determined by the dynamic weight circuit 234 based on the hydraulic pressure of each suspension actuator 134 recorded over time to determine a mean value of pressures. The dynamic front axle weight FWD is based on the mean value. In some embodiments, the dynamic front axle weight FWD is determined based on the mean hydraulic pressure values of the front suspension actuators 134 only. The determined dynamic front axle weight FWD is then used to determine a dynamic weight transfer based on a comparison of the dynamic front axle weight FWD in field operation with the static front axle weight FWS(i) determined while the vehicle 10 is stationary. In some embodiments, the dynamic weight circuit 234 determines a dynamic rear axle weight RWD is determined based on the hydraulic pressure of each suspension actuator 134 recorded over time to determine a mean value of pressures. The dynamic rear axle weight RWD is based on the mean value. In some embodiments, the dynamic rear axle weight RWD is determined based on the mean hydraulic pressure values of the rear suspension actuators 134 only. In some embodiments, the dynamic front axle weight FWD and the dynamic rear axle weight RWD are determined together based on the mean values of pressures measured at all of the suspension actuators 134.

The tire pressure circuit 238 is structured to receive information from the tire inflation system 154 including the tire pressure units 158 and the tire pressure sensors 208. The tire pressure circuit 238 determines current tire pressures for each of the tires 78, 88 of the vehicle 10 and also stores a number of front tires 78 and a number of rear tires 88. In some embodiments, the number of front tires 78 and the number of rear tires 88 is preprogrammed, received from a user, or automatically detected. The tire pressure circuit 238 is also structured to control deflation or inflation of individual tires 78, 88 via the tire inflation system 154 including the tire pressure units 158. The tire pressure circuit 238 is structured to inflate the front tires 78 to a baseline front tire inflation pressure Pf, and a baseline rear tire inflation pressure Pr, determine current tire pressures, and to inflate and/or deflate the front tires 78 and rear tires 88 to updated pressures during operation of the vehicle 10.

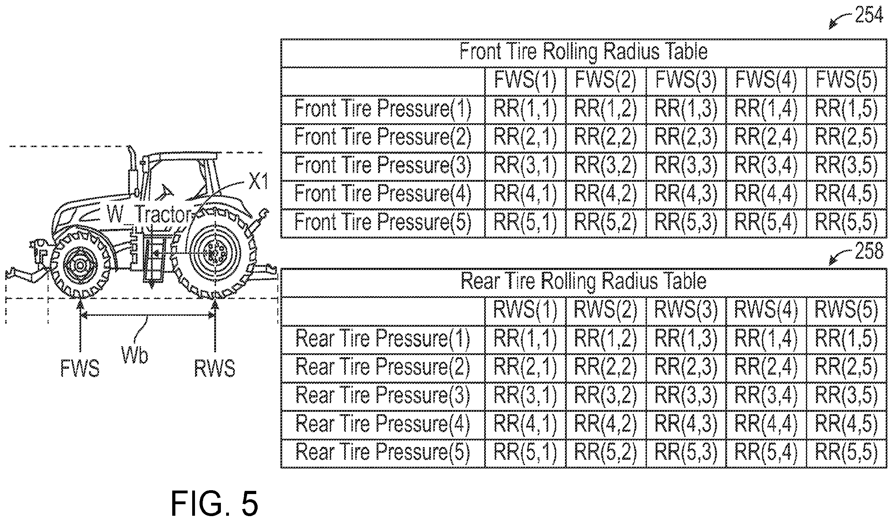

The rolling radius circuit 242 is structured to determine a tire rolling radius for each tire 78, 88 based on the current tire inflation pressures and tire vertical load (e.g., the static front axle weight FWS(i), the static rear axle weight RWS(i), the dynamic front axle weight FWD, and the dynamic rear axle weight RWD). In some embodiments, the relationship between the tire rolling radius and tire parameters can be captured via equations, algorithms, models, etc. In some embodiments, a test method can be used to calibrate the tire rolling radius RR(I,j) of the front tires 78 and the rear tires 88 based on the front wheel loads (e.g., FWS(i)), the rear wheel loads (e.g., RWS(i)), and tire inflation pressures. As shown in FIG. 5, a rolling radius table is provided that returns a tire rolling radius when queried using the wheel weight (e.g., static or dynamic) and the inflation pressure. The rolling radius table can also be queried using the rolling radius and the wheel weight, or any other combination of inputs. In some embodiments, the wheel weight includes the static front wheel weight FWS, the dynamic front wheel weight FWD, the static rear wheel weight RWS, and/or the dynamic rear wheel weight RWD. In some embodiments, the rolling radius table receives a dynamic weight shift as an input. While the static wheel weights may be valuable for determining the baseline tire pressure, the dynamic wheel weights may be more valuable when determining the rolling radius during operation. In some embodiments, in each table, one of the rows, (e.g., front tire pressure (3)), includes the tire pressures based on a tire manufacturer's inflation table. The rolling radius circuit 242 returns a front tire rolling radius Rf, and a rear tire rolling radius Rr. Within this disclosure, a lookup table may refer to one or more tables that may include combined information or may include more than one table including multiple information types.

The wheel lead circuit 246 is structured to receive the front wheel transmission ratio Zf, the rear wheel transmission ratio Zr, the front tire inflation pressure Pf and the rear tire inflation pressure Pr from the tire pressure circuit 238, the static front axle weight FWS(i) and the static rear weight RWS(i) from the hydraulic pressure circuit 230, and the front tire rolling radius Rf and the rear tire rolling radius Rr from the rolling radius circuit 242. The wheel lead circuit 246 determines a front to rear lead-lag ratio Zb, as follows:

$$ Z_b = \frac{2\pi R_f Z_f}{2\pi R_r Z_r} $$

Due to the dynamic weight transfer during operation of the vehicle 10, the front and rear tire rolling radii change over time. The front axle lead ratio Z, is calculated iteratively and tire pressures are adjusted to maintain a desirable front axle lead ratio Z. The front axle lead ratio Z is optimized via the controller 200 for maximum tractive performance by adjusting the front tire pressure, the rear tire pressure, or both pressures.

The controller 200 carries out the tasks of data recording and weight transfer estimation, and stores at least the following information: the tractor static front weight FWS, and static rear weight RWS, the front tire rolling radius table and rear tire rolling radius table, the baseline front tire pressure Pf and rear tire pressure Pr, the number of front tires and number of rear tires, and the front weight supported by the front suspension actuators 134. After the estimation of the dynamic weight transfer, the controller 200 determines a tire pressure adjustment (e.g., inflation or deflation) needed for optimal tractive efficiency by using the stored information. The tire inflation pressure adjustments are executed through the tire inflation system 154.

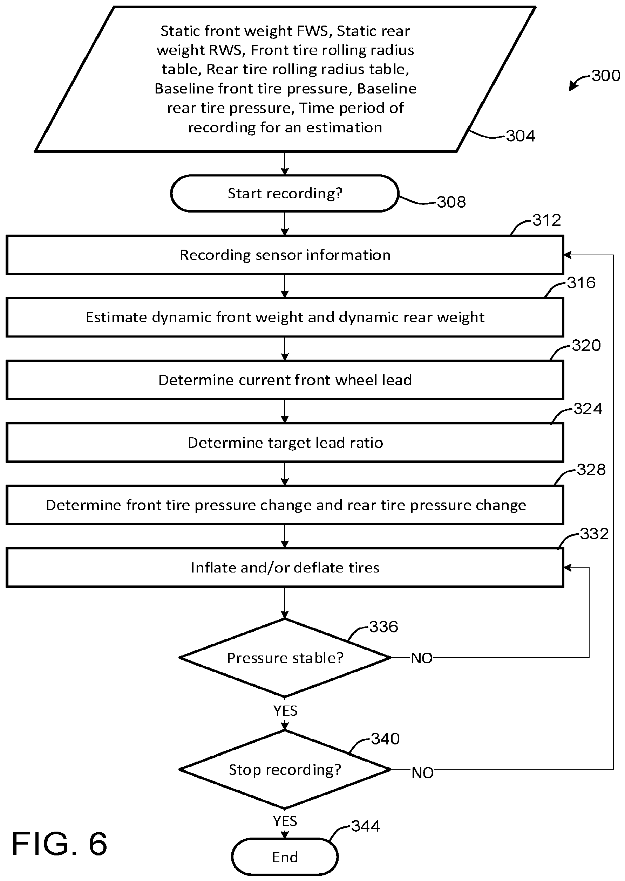

As shown in FIG. 6, a method 300 can be implemented by the systems of the vehicle 10 including the controller 200 discussed above. At step 304, the controller 200 initiates connections to the hydraulic suspension system 130, the tire inflation system 154, and the sensor array 210, and/or other parts of the vehicle 10 via the communications interface 250 so that the controller can determine the static front weight FWS, the static rear weight RWS, the front tire rolling radius Rf, the rear tire rolling radius Rr, the baseline front tire pressure Pf, the baseline rear tire pressure Pf, and a time period of recording for an estimation. In some embodiments, the time period of recording can be user defined or predefined within the controller 200 (e.g., one minute, two minutes, etc.). The time period of recording and for making adjustments to the tire pressure can also be limited or turned off after a predetermined or selected time period or a predetermined or selected number of adjustments.

At step 308, the process of recording information is started. A start command can be received from a user input (e.g., via a button, a command entered through a human-machine-interface, etc.), automatically prompted by action (e.g., attachment of a drawbar implement, engagement of an accessory, etc.), or otherwise initiated. In some embodiments, a continuous execution of the method 300 is engaged once a start recording command is received. In some embodiments, the time period for recording includes a limited number of executions which is terminated by a stop recording command (see for example step 340).

At step 312, the controller 200 receives and records the static front weight FWS and the static rear weight RWS via the hydraulic pressure circuit 230, the front tire rolling radius Rf and the rear tire rolling radius Rr by querying lookup tables via the rolling radius circuit 242, and the baseline front tire pressure Pf and the baseline rear tire pressure Pf via the tire pressure circuit 238.

At step 316, the dynamic weight circuit 234 determines the dynamic front axle weight FWD and the dynamic rear axle weight RWD. In some embodiments, the dynamic weight circuit 234 determines dynamic weights at each tractive element 78, 88 (e.g., wheel/tire) at each set of tractive elements 78, 88 (e.g., a set of two wheels/tires on a left side of the vehicle 10 and a set of two wheels/tires or a right side of the vehicle 10 are determined as individual dynamic weights). Within this disclosure a dynamic weight may refer to a dynamic weight of an entire axle, an individual tractive element 78, 88 (e.g., a wheel/tire), or a subset of tractive elements 78, 88 (e.g., a group of wheels/tires). In some embodiments, a dynamic weight shift or a dynamic weight transfer is determined at step 316 by comparing the dynamic front weight FWD with the static front weight FWS determined earlier in step 312.

At step 320, the current front axle lead ratio Z is determined by the controller 200. The tire rolling radius circuit 242 determines the front rolling radius Rf and the rear rolling radius Rr based on the tables discussed above. In some embodiments, the rolling radius circuit 242 may include a machine learning engine that receives tire pressures, dynamic weights, static weights, hydraulic pressures, and/or other inputs and determines the front rolling radius Rf and the rear rolling radius Rr using a deep neural network, a neural network, reinforcement learning, or another machine learning architecture. The front rolling radius Rf and the rear rolling radius Rr, and front and rear transmission ratios Zf and Zr (received from the drivetrain 50 for example) are then used by the wheel lead circuit 246 to determine the current front axle lead ratio Z.

At step 324, the wheel lead circuit 246 determines a target lead ratio. In some embodiments, the target lead ratio is user defined (e.g., selected from a menu, graphical user interface, human machine interface, buttons, dials, etc.). In some embodiments, the controller 200 recognizes operating conditions and an operational mode automatically (e.g., towing an implement, travelling over a road, travelling in mud, etc.) and automatically selects a target lead ratio corresponding to the operating conditions. In some embodiments, the operational modes include a travel mode for travelling on a road or another level surface while the vehicle is relatively unloaded (e.g., not pulling an engaged implement such as a cultivator or a loaded wagon). In some embodiments, the target front axle lead ratio Z equals 1.0 (i.e., a 0% front wheel lead) while operating in the travel mode. In some embodiments, operational modes include a field mode for operation in a field or while towing or otherwise utilizing an implement. In some embodiments, the target front axle lead ratio Z is optimized for optimal tractive efficiency (e.g., a 1% front wheel lead or a target front axle lead ratio Z of 1.01) while operating in the field mode. In some embodiments, operational modes are not used and the target front axle lead ratio Z is set based on detected activities. For example, in some embodiments, the target lead ratio desirably provides zero front wheel lead (i.e., the front axle lead ratio Z equals 1.0) while travelling over a road or relatively level path, and/or the target lead ratio desirably provides an optimal front axle lead ratio while towing an implement or when operating in slippery conditions (e.g., mud, etc.).

At step 328, the tire pressure circuit 238 determines a front tire pressure change and a rear tire pressure change to achieve the target lead ratio. In some embodiments, the target front tire pressure change and rear tire pressure change are achieved by reverse look up using the rolling radius tables along with the dynamic weights, and the static weights and the target lead ratio. In some embodiments, a machine learning engine can be used to correlate, learn, and determine tire pressures corresponding to the target lead ratio during operation of the vehicle 10.

At step 332, the controller 200 commands the tire inflation system 154 to implement the front tire pressure change and the rear tire pressure change to achieve the target lead ratio as determined by the tire pressure circuit 238.

At step 336, the controller 200 checks to determine if the tire pressure of each tire 78, 88 is stable. If the pressures are not stable, the method 300 returns to step 332 and the tires are inflated/deflated to the desired pressures.

At step 340, the controller 200 determines if the time period of recording has been met. If not, the method 300 returns to step 312 and the method 300 continues to adjust the tire inflation pressure to achieve the target lead ratio. If the time period of recording has been achieved, then the method 300 stops at step 344 and normal operation of the vehicle 10 continues without the method 300 continually running.

When the vehicle 10 travels without a tractive load and both the front axle 76 and the rear axle 86 of the vehicle 10 are engaged, that is, without an implement or a trailer or grain cart, etc., an ideal situation from tractive efficiency perspective is that both the front tractive elements 78 and the rear tractive elements 88 have zero slip, and therefore the slip related power loss is zero. In situations of front wheel lead (e.g., a positive front axle lead ratio Z), the front tractive elements 78 slip, and the rear tractive elements 88 skid. The front slip force, or driving force, is opposed by the rear skid force, or resistance force, so that the total longitudinal force on the vehicle 10 is zero. Tractive power loss occurs due to the kinematic discrepancy between front and rear wheels. The greater the speed lead or lag, the greater the power loss and tire wear. The fuel consumption of the vehicle 10 increases as the front axle lead ratio Z increases. It is desirable that front wheel will not skid in order to maintain steering controllability, and excessive front wheel lead (e.g., the front axle lead ratio Z) will increase the front wheel slip and results in rear wheel digging. When the vehicle 10 travels with a tractive load such as a drawbar implement, a hitched implement, a trailer, or a grain cart, in a situation of front wheel lead, the front wheels have a higher slip and the rear wheels have a lower slip. Because the tractive efficiency of a wheel is a function of its slip, the front wheels of a higher slip and the rear wheels of a lower slip may not result in an optimal wheel tractive efficiency together, and consequently the overall vehicle tractive efficiency will not reach an optimal value. Dynamic tractive load causes dynamic tractor weight transfer from front axle to rear axle. The greater the tractive load, the greater the weight transfer. In general, a tire is inflated to the pressures based on static load on the wheel. The reduced front wheel load causes the front tire rolling radius, Rf, to increase, and at the same time the heavier rear wheel load causes the rear tire rolling radius, Rr, to decrease. The dynamic weight transfer, as a result of dynamic tractive load, can further increase the kinematic discrepancy and the front axle lead ratio Z, between front and rear wheels, and consequently impact the tractive efficiency of the tractor.

It is important to note that the construction and arrangement of the vehicle 10 and the systems and components thereof (e.g., the driveline 50, the braking system 100, the control system 200, etc.) as shown in the various exemplary embodiments is illustrative only. Additionally, any element disclosed in one embodiment may be incorporated or utilized with any other embodiment disclosed herein.

**Claims**

1. A system, comprising:

   a hydraulic suspension system (130) including:

   a front suspension actuator (134), and
   a front suspension pressure sensor (210) associated with the front suspension actuator (134);

   a tire inflation system (154); and
   one or more processing circuits (212) comprising one or more memory devices (218) coupled to one or more processors (216), the one or more memory devices (218) configured to store instructions thereon that, when executed by the one or more processors (216), cause the one or more processors (216) to:

   determine a dynamic weight based on information received from the front suspension pressure sensor (210) of the hydraulic suspension system (130),
   the system being **characterized in that** said instructions further cause said one or more processors (216) to:

   determine a current front axle lead ratio based on the dynamic weight,
   determine a target front axle lead ratio, and
   control operation of the tire inflation system (154) to adjust from the current front axle lead ratio to the target front axle lead ratio.

2. The system of claim 1, wherein the one or more memory devices (218) are further configured to store instructions thereon that, when executed by the one or more processors (216), cause the one or more processors (216) to:

   determine a mean value of pressure information received from the front suspension pressure sensor (210) over a time period of recording, and determine the front dynamic weight based on the mean value.

3. The system of any of the preceding claims, wherein the one or more memory devices (218) are further configured to store instructions thereon that, when executed by the one or more processors (216), cause the one or more processors (216) to:

determine a front static weight based on information received from the front suspension pressure sensor (210),

determine a dynamic weight transfer based on the front static weight and the dynamic weight, and

determine the current front axle lead ratio based on the dynamic weight transfer.

4. The system of any of the preceding claims, wherein the hydraulic suspension system (130) further includes a rear suspension actuator (134), and a rear suspension pressure sensor (210) associated with the rear suspension actuator (134);

further comprising a front tire coupled to the front suspension actuator (134) and a rear tire coupled to the rear suspension actuator (134); and wherein the one or more memory devices (218) are further configured to store instructions thereon that, when executed by the one or more processors (216), cause the one or more processors (216) to:

determine a front rolling radius of the front tire based on information received from the front suspension pressure sensor (210),

determine a rear rolling radius of the rear tire based on information received from the rear suspension pressure sensor (210), and

determine the current front axle lead ratio based on the front rolling radius and the rear rolling radius.

5. The system of claim 4, further comprising:

a front tire pressure sensor (210) associated with the front tire; and
a rear tire pressure sensor (210) associated with the rear tire,
wherein the one or more memory devices (218) are further configured to store instructions thereon that, when executed by the one or more processors (216), cause the one or more processors (216) to:

query a lookup table using information received from the front tire pressure sensor (210), the rear tire pressure sensor (210), the front suspension pressure sensor (210), and the rear suspension pressure sensor (210), and

return the front rolling radius and the rear rolling radius based on the query.

6. The system of claim 4, further comprising:

a front tire pressure sensor (210) associated with the front tire; and
a rear tire pressure sensor (210) associated with the rear tire,
wherein the one or more memory devices (218) are further configured to store instructions thereon that, when executed by the one or more processors (216), cause the one or more processors (216) to:

input information received from the front tire pressure sensor (210), the rear tire pressure sensor (210), the front suspension pressure sensor (210), and the rear suspension pressure sensor (210) into a machine learning engine, and

return the front rolling radius and the rear rolling radius based on the input.

7. The system of any of the preceding claims, wherein the one or more memory devices (218) are further configured to store instructions thereon that, when executed by the one or more processors (216), cause the one or more processors (216) to:

determine that the current front axle lead ratio is greater than the target front axle lead ratio, and control operation of the tire inflation system (154) to inflate a rear tire or deflate a front tire to achieve the target front axle lead ratio.

8. The system of any of the preceding claims, wherein the one or more memory devices (218) are further configured to store instructions thereon that, when executed by the one or more processors (216), cause the one or more processors (216) to:

determine that the current front axle lead ratio is less than the target front axle lead ratio, and control operation of the tire inflation system (154) to deflate a rear tire or inflate a front tire to achieve the target front axle lead ratio.

9. The system of any of the preceding claims, wherein the one or more memory devices (218) are further configured to store instructions thereon that, when executed by the one or more processors (216), cause the one or more processors (216) to:
control operation of the tire inflation system (154) to adjust from the current front axle lead ratio to the target front axle lead ratio while an implement is being towed.

10. The system of any of the preceding claims, wherein the one or more memory devices (218) are further configured to store instructions thereon that, when executed by the one or more processors (216), cause the one or more processors (216) to:

> determine an operational mode including at least a travel mode and a field mode, and determine the target front axle lead ratio based on the operational mode.

11. The system of claim 10, wherein the one or more memory devices (218) are further configured to store instructions thereon that, when executed by the one or more processors (216), cause the one or more processors (216) to:
determine an optimal target front axle lead ratio.

12. The system of claim 10, wherein the one or more memory devices (218) are further configured to store instructions thereon that, when executed by the one or more processors (216), cause the one or more processors (216) to:
determine the operational mode based on user inputs.

13. The system of any of the preceding claims, wherein the one or more memory devices (218) are further configured to store instructions thereon that, when executed by the one or more processors (216), cause the one or more processors (216) to:

> control operation of the tire inflation system (154) to inflate or deflate front tires or rear tires; determine that the target front axle lead ratio has not been achieved after inflation or deflation of the front or rear tires, and control operation of the tire inflation system (154) to inflate or deflate the front tires or the rear tires after determining that the target front axle lead ratio has not been achieved.

14. The system of claim 13, wherein the one or more memory devices (218) are further configured to store instructions thereon that, when executed by the one or more processors (216), cause the one or more processors (216) to:
determine that tire pressures are stable after the target front axle lead ratio has been achieved.

15. The system of any of the preceding claims, wherein the one or more memory devices (218) are further configured to store instructions thereon that, when executed by the one or more processors (216), cause the one or more processors (216) to:

> determine the current front axle lead ratio using the following equation:

$$Z = \frac{V_{tf}}{V_{tr}} = \frac{2\pi R_f Z_f}{2\pi R_r Z_r},$$

wherein Vtf is a front wheel theoretical ground speed, Vtr is a rear wheel theoretical ground speed, Zf is a front wheel transmission ratio, Zr is a rear wheel transmission ratio, Rf is a front wheel rolling radius, and Rr is a rear wheel rolling radius.

**Patentansprüche**

1. System mit

> einem hydraulischen Radaufhängungssystem (130), das

> > eine vordere Radaufhängungs-Betätigungseinrichtung (134) und einen vorderen Radaufhängungs-Drucksensor (210) umfasst, der der vorderen Radaufhängungs-Betätigungseinrichtung (134) zugeordnet ist;

> einem Reifendrucksystem (154); und einer oder mehreren Verarbeitungseinrichtungen (212), die eine oder mehrere Speichereinrichtungen (218) aufweisen, die mit einem oder mehreren Prozessoren (216) verbunden sind, wobei die eine oder die mehreren Speichereinrichtungen (218) dazu eingerichtet sind, Anweisungen zu speichern, sodass, wenn diese durch den einen oder die mehreren Prozessoren (216) ausgeführt werden, den einen oder die mehreren Prozessoren (216) zu folgendem veranlassen:

> > Bestimmen eines dynamischen Gewichts auf Basis von Informationen, die von dem vorderen Radaufhängungs-Drucksensor (210) des hydraulischen Radaufhängungssystems (130) empfangen werden, wobei das System **dadurch gekennzeichnet ist, dass** die Anweisungen den einen oder die mehreren Prozessoren (216) zu folgendem veranlassen:

> > > Bestimmen eines Ist-Trimmverhältnisses der Vorderachse auf Basis des dynamischen Gewichts, Bestimmen des Soll-Trimmverhältnisses der Vorderachse, und Steuern der Betätigung des Reifendrucksystems (154), um eine Angleichung des Ist-Trimmverhältnisses der Vorderachse an das Soll-Trimmverhältnis der Vorderachse zu bewirken.

**2.** System nach Anspruch 1, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Bestimmen eines Mittelwerts der Druckinformation, die von dem vorderen Radaufhängungs-Drucksensor (210) über eine Zeitdauer der Aufzeichnung erhalten werden, und
Bestimmen des vorderen dynamischen Gewichts auf Basis des Mittelwertes.

**3.** System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Bestimmen eines vorderen statischen Gewichts auf Basis von Informationen, die von dem vorderen Radaufhängungs-Drucksensor (210) erhalten werden,
Bestimmen einer dynamischen Gewichtsübertragung auf Basis des vorderen statischen Gewichts und des dynamischen Gewichts, und
Bestimmen des Ist-Trimmverhältnisses der Vorderachse auf Basis der dynamischen Gewichtsübertragung.

**4.** System nach einem der vorhergehenden Ansprüche, wobei das hydraulische Radaufhängungssystem (130) weiterhin eine hintere Radaufhängungs-Betätigungseinrichtung (134) und einen hinteren Radaufhängungs-Drucksensor (210), der der hinteren Radaufhängungs-Betätigungseinrichtung (134) zugeordnet ist, umfasst;

wobei das System weiterhin einen Vorderreifen, der mit der vorderen Radaufhängungs-Betätigungseinrichtung (134) verbunden ist, und einen Hinterreifen aufweist, der mit der hinteren Radaufhängungs-Betätigungseinrichtung (134) verbunden ist; und
wobei die eine oder die mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Bestimmen eines vorderen Rollradius des Vorderreifens auf Basis von Informationen, die von dem vorderen Radaufhängungs-Drucksensor (210) empfangen werden,
Bestimmen eines hinteren Rollradius des Hinterreifens auf Basis von Informationen, die von dem hinteren Radaufhängungs-Drucksensor (210) empfangen werden,
Bestimmen des Ist-Trimmverhältnisses der Vorderachse auf Basis des vorderen Rollradius und des hinteren Rollradius.

**5.** System nach Anspruch 4, das des Weiteren aufweist:

einen Vorderreifen-Drucksensor (210), der dem Vorderreifen zugeordnet ist; und
einen Hinterreifen-Drucksensor (210), der dem Hinterreifen zugeordnet ist,
wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Abfragen einer Nachschlagtabelle, die Informationen verwendet, die von dem Vorderreifen-Drucksensor (210), dem Hinterreifen-Drucksensor (210), dem vorderen Radaufhängungs-Drucksensor (210), und dem hinteren Radaufhängungs-Drucksensor (210) erhalten werden, und
Zurückgeben des vorderen Rollradius und des hinteren Rollradius auf Basis der Abfrage.

**6.** System nach Anspruch 4, das des Weiteren aufweist:

einen Vorderreifen-Drucksensor (210), der dem Vorderreifen zugeordnet ist; und
einen Hinterreifen-Drucksensor (210), der dem Hinterreifen zugeordnet ist,
wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Eingeben von Informationen, die von dem Vorderreifen-Drucksensor (210), dem Hinterreifen-Drucksensor (210), dem vorderen Radaufhängungs-Drucksensor (210), und dem hinteren Radaufhängungs-Drucksensor (210) empfangen werden, in ein Maschinenlernprogramm, und

Zurückgeben des vorderen Rollradius und des hinteren Rollradius auf Basis der Eingabe.

7.  System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

    Feststellen, dass das Ist-Trimmverhältnis der Vorderachse größer als das Soll-Trimmverhältnis der Vorderachse ist, und
    Steuern des Betriebs des Reifendrucksystems (154) derart, dass ein Hinterreifen aufgepumpt oder Luft aus einem Vorderreifen abgelassen wird, um das Soll-Trimmverhältnis der Vorderachse zu erhalten.

8.  System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

    Feststellen, dass das Ist-Trimmverhältnis der Vorderachse geringer als das Soll-Trimmverhältnis der Vorderachse ist, und
    Steuern des Betriebs des Reifendrucksystems (154) derart, dass aus einem Hinterreifen Druck abgelassen wird oder ein Vorderreifen aufgepumpt wird, um das Soll-Trimmverhältnis der Vorderachse zu erhalten.

9.  System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:
    Steuern des Betriebs des Reifendrucksystems (154), um von dem Ist-Trimmverhältnis der Vorderachse aus das Soll-Trimmverhältnis der Vorderachse einzustellen, während ein Arbeitsgerät gezogen wird.

10. System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

    Bestimmen eines Betriebsmodus, der mindestens einen Fahrmodus und einen Feldmodus umfasst, und
    Bestimmen des Soll-Trimmverhältnisses der Vorderachse auf Basis des Betriebsmodus.

11. System nach Anspruch 10, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:
    Bestimmen eines optimalen Soll-Trimmverhältnisses der Vorderachse.

12. System nach Anspruch 10, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:
    Bestimmen des Betriebsmodus auf Basis von Eingaben, die durch eine Bedienperson erfolgen.

13. System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

    Steuern des Betriebs des Reifendrucksystems (154), um die Vorderreifen oder die Hinterreifen aufzupumpen oder Luft von diesen abzulassen;
    Feststellen, dass das Soll-Trimmverhältnis der Vorderachse nicht erreicht wurde, nachdem die Vorder- oder Hinterreifen aufgepumpt wurden oder Luft von diesen abgelassen wurde, und
    Steuern des Betriebs des Reifendrucksystems (154), um die Vorder- oder Hinterreifen aufzupumpen oder Luft von diesen abzulassen, nachdem festgestellt wird, dass das Soll-Trimmverhältnis der Vorderachse nicht erreicht wurde.

14. System nach Anspruch 13, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:
    Feststellen, dass die Reifendrücke stabil sind, nachdem das Soll-Trimmverhältnis der Vorderachse erreicht wurde.

15. System nach einem der vorhergehenden Ansprüche, wobei die eine oder mehreren Speichereinrichtungen (218) weiterhin dazu eingerichtet sind, Anweisungen zu speichern, die, wenn diese durch den einen oder die mehreren Prozessoren (216) ausgeführt werden, den einen oder die mehreren Prozessoren (216) zu folgendem veranlassen:

Bestimmen des Ist-Trimmverhältnisses der Vorderachse unter Verwendung der folgenden Gleichung:

$$Z = \frac{V_{tf}}{V_{tr}} = \frac{2\pi R_f Z_f}{2\pi R_r Z_r},$$

wobei Vtf die theoretische Grundgeschwindigkeit des Vorderrads ist, $V_{tr}$ die theoretische Grundgeschwindigkeit des Hinterrads ist, Zf ein Übersetzungsverhältnis des Vorderrads ist, $Z_r$ ein Übersetzungsverhältnis des Hinterrads ist, Rf ein Rollradius des Vorderrads ist, und $R_r$ ein Rollradius des Hinterrads ist.

**Revendications**

1. Système, comprenant :

un système de suspension hydraulique (130) incluant :

un actionneur de suspension avant (134), et un capteur de pression de suspension avant (210) associé à l'actionneur de suspension avant (134) ;

un système de gonflage de pneumatique (154) ; et un ou plusieurs circuits de traitement (212) comprenant un ou plusieurs dispositifs de mémoire (218) couplés à un ou plusieurs processeurs (216), le ou les dispositifs de mémoire (218) étant configurés pour emmagasiner des instructions qui, lorsqu'elles sont exécutées par le ou les processeurs (216), amènent le ou les processeurs (216) à :

déterminer un poids dynamique en fonction d'informations reçues du capteur de pression de suspension avant (210) du système de suspension hydraulique (130), le système étant **caractérisé en ce que** lesdites instructions amènent en outre ledit ou lesdits processeurs (216) à :

déterminer un rapport de charge actuel de l'essieu avant en fonction du poids dynamique, déterminer un rapport de charge cible de l'essieu avant, et commander le fonctionnement du système de gonflage de pneumatique (154) pour passer du rapport de charge actuel de l'essieu avant au rapport de charge cible de l'essieu avant.

2. Système selon la revendication 1, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer une valeur moyenne des informations de pression reçues du capteur de pression de suspension avant (210) sur une période de temps d'enregistrement, et déterminer le poids dynamique avant en fonction de la valeur moyenne.

3. Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer un poids statique avant en fonction d'informations reçues du capteur de pression de suspension avant (210), déterminer un transfert de poids dynamique en fonction du poids statique avant et du poids dynamique, et déterminer le rapport de charge actuel de l'essieu avant en fonction du transfert de poids dynamique.

4. Système selon l'une quelconque des revendications précédentes, dans lequel le système de suspension hydraulique (130) inclut en outre un actionneur de suspension arrière (134) et un capteur de pression de suspension arrière (210) associé à l'actionneur de suspension arrière (134) ;

comprenant en outre un pneumatique avant couplé à l'actionneur de suspension avant (134) et un pneumatique arrière couplé à l'actionneur de suspension arrière (134) ; et dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer un rayon de roulement avant du pneumatique avant en fonction des informations reçues du capteur de pression de suspension avant (210),

déterminer un rayon de roulement arrière du pneumatique arrière en fonction des informations reçues du capteur de pression de suspension arrière (210), et

déterminer le rapport de charge actuel de l'essieu avant en fonction du rayon de roulement avant et du rayon de roulement arrière.

**5.** Système selon la revendication 4, comprenant en outre :

un capteur de pression de pneumatique avant (210) associé au pneumatique avant ; et

un capteur de pression de pneumatique arrière (210) associé au pneumatique arrière ; et

dans lequel le ou les dispositifs de mémoire (218) sont en outre configurés pour emmagasiner des instructions qui, lorsqu'elles sont exécutées par le ou les processeurs (216), amènent le ou les processeurs (216) à :

interroger une table de recherche à l'aide des informations reçues du capteur de pression de pneumatique avant (210), du capteur de pression de pneumatique arrière (210), du capteur de pression de suspension avant (210) et du capteur de pression de suspension arrière (210), et

renvoyer le rayon de roulement avant et le rayon de roulement arrière en fonction de la requête.

**6.** Système selon la revendication 4, comprenant en outre :

un capteur de pression de pneumatique avant (210) associé au pneumatique avant ; et

un capteur de pression de pneumatique arrière (210) associé au pneumatique arrière,

dans lequel le ou les dispositifs de mémoire (218) sont en outre configurés pour emmagasiner des instructions qui, lorsqu'elles sont exécutées par le ou les processeurs (216), amènent le ou les processeurs (216) à :

saisir des informations reçues du capteur de pression de pneumatique avant (210), du capteur de pression de pneumatique arrière (210), du capteur de pression de suspension avant (210) et du capteur de pression de suspension arrière (210), dans un moteur d'apprentissage automatique, et renvoyer le rayon de roulement avant et le rayon de roulement arrière en fonction de l'entrée.

**7.** Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer que le rapport de charge actuel de l'essieu avant est supérieur au rapport de charge cible de l'essieu avant, et

commander le fonctionnement du système de gonflage de pneumatique (154) pour gonfler un pneumatique arrière ou dégonfler un pneumatique avant afin d'atteindre le rapport de charge cible de l'essieu avant.

**8.** Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer que le rapport de charge actuel de l'essieu avant est inférieur au rapport de charge cible de l'essieu avant, et

commander le fonctionnement du système de gonflage de pneumatique (154) pour dégonfler un pneumatique arrière ou gonfler un pneumatique avant afin d'atteindre le rapport de charge cible de l'essieu avant.

**9.** Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

commander le fonctionnement du système de gonflage de pneumatique (154) pour passer du rapport de charge actuel de l'essieu avant au rapport de charge cible de l'essieu avant pendant qu'un outil est tracté.

**10.** Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer un mode de fonctionnement incluant au moins un mode de déplacement et un mode de reconnaissance, et
déterminer le rapport de charge cible de l'essieu avant en fonction du mode de fonctionnement.

11. Système selon la revendication 10, dans lequel le ou les dispositifs de mémoire (218) sont en outre configurés pour emmagasiner des instructions qui, lorsqu'elles sont exécutées par le ou les processeurs (216), amènent le ou les processeurs (216) à : déterminer un rapport de charge cible optimal de l'essieu avant.

12. Système selon la revendication 10, dans lequel le ou les dispositifs de mémoire (218) sont en outre configurés pour emmagasiner des instructions qui, lorsqu'elles sont exécutées par le ou les processeurs (216), amènent le ou les processeurs (216) à : déterminer le mode de fonctionnement en fonction des entrées de l'utilisateur.

13. Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

commander le fonctionnement du système de gonflage de pneumatique (154) pour gonfler ou dégonfler les pneumatiques avant ou les pneumatiques arrière ;
déterminer que le rapport de charge cible de l'essieu avant n'a pas été atteint après le gonflage ou le dégonflage des pneumatiques avant ou arrière, et
commander le fonctionnement du système de gonflage de pneumatique (154) pour gonfler ou dégonfler les pneumatiques avant ou les pneumatiques arrière après avoir déterminé que le rapport de charge cible de l'essieu avant n'a pas été atteint.

14. Système selon la revendication 13, dans lequel le ou les dispositifs de mémoire (218) sont en outre configurés pour emmagasiner des instructions qui, lorsqu'elles sont exécutées par le ou les processeurs (216), amènent le ou les processeurs (216) à : déterminer que les pressions de pneumatique sont stables une fois que le rapport de charge cible de l'essieu avant a été atteint.

15. Système selon l'une quelconque des revendications précédentes, dans lequel le ou les dispositifs de mémoire (218) sont en outre configurés pour emmagasiner des instructions qui, lorsqu'elles sont exécutées par le ou les processeurs (216), amènent le ou les processeurs (216) à :

déterminer le rapport de charge actuel de l'essieu avant à l'aide de l'équation suivante :

$$Z = \frac{V_{tf}}{V_{tr}} = \frac{2\pi R_f Z_f}{2\pi R_r Z_r},$$

dans laquelle Vtf est une vitesse d'avancement théorique de la roue avant, Vtr est une vitesse d'avancement théorique de la roue arrière, Zf est un rapport de transmission de la roue avant, Zr est un rapport de transmission de la roue arrière, Rf est un rayon de roulement de la roue avant et Rr est un rayon de roulement de la roue arrière.

FIG. 1

FIG. 2

FIG. 3

EP 4 186 716 B1

FIG. 4

FIG. 5

Static front weight FWS, Static rear
weight RWS, Front tire rolling radius
table, Rear tire rolling radius table,
Baseline front tire pressure, Baseline
rear tire pressure, Time period of
recording for an estimation — 304

— 300

Start recording? — 308

Recording sensor information — 312

Estimate dynamic front weight and dynamic rear weight — 316

Determine current front wheel lead — 320

Determine target lead ratio — 324

Determine front tire pressure change and rear tire pressure change — 328

Inflate and/or deflate tires — 332

Pressure stable? — 336
— NO

YES

Stop recording? — 340
— NO

YES

**FIG. 6**

End — 344

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4887454 A